(19) Europäisches Patentamt
European Patent Office
Office européen des brevets

(11) Veröffentlichungsnummer: **0 538 868 B1**

(12) **EUROPÄISCHE PATENTSCHRIFT**

(45) Veröffentlichungstag der Patentschrift: **24.08.94**

(51) Int. Cl.[5]: **C08G 77/28**, C08G 77/38, C07F 7/08

(21) Anmeldenummer: **92118117.8**

(22) Anmeldetag: **22.10.92**

# (54) Buntesalzgruppen aufweisende Organosiliciumverbindungen, Verfahren zu ihrer Herstellung sowie ihre Verwendung.

(30) Priorität: **24.10.91 DE 4135142**

(43) Veröffentlichungstag der Anmeldung: **28.04.93 Patentblatt 93/17**

(45) Bekanntmachung des Hinweises auf die Patenterteilung: **24.08.94 Patentblatt 94/34**

(84) Benannte Vertragsstaaten: **AT BE CH DE ES FR GB IT LI NL**

(56) Entgegenhaltungen:
**US-A- 4 230 816**
**US-A- 4 537 595**

(73) Patentinhaber: **WACKER-CHEMIE GMBH**
**Hanns-Seidel-Platz 4**
**D-81737 München (DE)**

(72) Erfinder: **Hager, Rudolf, Dr.**
**Beckstrasse 57**
**W-8262 Altötting (DE)**
Erfinder: **Deubzer, Bernward, Dr.**
**Virchowstrasse 14**
**W-8263 Burghausen (DE)**

**EP 0 538 868 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Organosiliciumverbindungen mit mindestens einer über Kohlenstoff an Silicium gebundenen S-Alkylthiosulfatgruppe, welche im folgenden auch als Buntesalzgruppe bezeichnet werden soll, ein verfahren zu deren Herstellung sowie deren Verwendung.

H. Distler in Angew. Chem. 79 (1967) 520 gibt eine Übersicht über Darstellungsmethoden und Eigenschaften von organischen Verbindungen mit Buntesalzgruppen. Die Synthesemethoden beruhen dabei im wesentlichen auf der Umsetzung reaktiver Verbindungen, wie Alkylhalogeniden, Epoxyalkanen oder Alkenen, mit Alkalithiosulfat in polarem Medium. Da Organosiliciumverbindungen darin nicht oder nur geringfügig löslich sind, läßt sich die beschriebene Verfahrensweise nicht ohne weiteres auf die Darstellung von Organosiliciumverbindungen mit Buntesalzgruppen übertragen.

Organosiliciumverbindungen mit Buntesalzgruppen sind bereits bekannt. S.F. Thames und L.H. Edwards in J. Heterocyclic Chemistry 5 (1968) 115 beschreiben beispielsweise die Herstellung von Silanen mit N-substituierten Buntesalzgruppen durch Umsetzung von Halogenalkyltrimethylsilanen mit Aminoethanthioschwefelsäure oder Vinyltrimethylsilan mit Ethylenimin. Gemäß DE 33 23 881 A1 (Th. Goldschmidt AG; ausgegeben am 10. Januar 1985) bzw. der entsprechenden US 4,537,595 und DE 37 35 086 C1 (Th. Goldschmidt AG; ausgegeben am 2. Februar 1989) bzw. der entsprechenden US 4,895,917 werden Organopolysiloxane mit Buntesalzgruppen durch Umsetzung der entsprechenden epoxyfunktionellen Siloxane mit Alkali- oder Ammoniumthiosulfat hergestellt. Da bei dieser Reaktion der Epoxidring geöffnet wird, weisen alle an Silicium gebundenen Buntesalzgruppen Hydroxylgruppen auf, die sich bei Applikationen oder Folgereaktionen als störend erweisen können.

Es bestand daher die Aufgabe, Buntesalzgruppen aufweisende Organosiliciumverbindungen und ein Verfahren zu deren Herstellung bereitzustellen. Diese Aufgabe wird durch die Erfindung gelöst.

Gegenstand der Erfindung sind Buntesalzgruppen aufweisende Organosiliciumverbindungen, die keine der Buntesalzgruppe benachbarte Hydroxylgruppe aufweisen, aus Einheiten der allgemeinen Formel

$$R_a(R^1O)_bR^2_cSiO_{\frac{4-a-b-c}{2}} \qquad (I),$$

worin

R gleich oder verschieden sein kann und Wasserstoffatom oder einen einwertigen, ggf. substituierten Kohlenwasserstoffrest mit 1 bis 12 Kohlenstoffatomen bedeutet,

$R^1$ gleich oder verschieden sein kann und Wasserstoffatom oder einen einwertigen, ggf. substituierten Kohlenwasserstoffrest mit 1 bis 6 Kohlenstoffatomen bedeutet,

$R^2$ gleich oder verschieden sein kann und einen Rest $-QS_2O_3M$ bedeutet mit Q gleich zweiwertigem Kohlenwasserstoffrest und M gleich Alkalirest oder gegebenenfalls substituierter Ammoniumrest,

a 0, 1, 2 oder 3, bevorzugt 1, 2 oder 3, besonders bevorzugt 1 oder 2, ist,

b 0, 1, 2 oder 3, bevorzugt 0, 1 oder 2, besonders bevorzugt 0 oder 1, ist und

c 0, 1, 2 oder 3, bevorzugt 0, 1 oder 2, besonders bevorzugt 0 oder 1, ist,

mit der Maßgabe, daß die Organosiliciumverbindung mindestens einen Rest $R^2$ aufweist und die Summe aus a, b und c kleiner oder gleich 3 ist.

Der durchschnittliche Wert von a liegt bevorzugt zwischen 0,5 und 2,5, besonders bevorzugt zwischen 1 und 2,4.

Der durchschnittliche Wert von b liegt bevorzugt zwischen 0 und 2, besonders bevorzugt zwischen 0 und 1.

Der durchschnittliche Wert von c liegt bevorzugt zwischen 0,01 und 2, besonders bevorzugt zwischen 0,1 und 1.

Bei Rest R handelt es sich bevorzugt um Kohlenwasserstoffreste mit 1 bis 6 Kohlenstoffatom(en), insbesondere um den Methylrest.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Bei Rest $R^1$ handelt es sich bevorzugt um Wasserstoffatom und Alkylreste mit 1 bis 3 Kohlenstoffatom(en), insbesondere um den Methylrest und Ethylrest.

Beispiele für Reste $R^1$ sind die für den Rest R genannten Beispiele mit 1 bis 6 Kohlenstoffatom(en).

Bei Rest Q handelt es sich bevorzugt um zweiwertige Kohlenwasserstoffreste mit 2 bis 10 Kohlenstoffatomen.

Beispiele für Rest Q sind Ethylen-, n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste.

Besonders bevorzugt handelt es sich bei Q um den n-Propylenrest.

Beispiele für Rest M sind Kationen der Alkalimetalle, wie die von Lithium, Natrium, Kalium, Rubidium und Cäsium, sowie Reste der Formel

$$^{+}NR^8{}_4 \quad (IV),$$

wobei $R^8$ gleich oder verschieden sein kann und ein Wasserstoffatom oder einen einwertigen organischen Rest bedeutet, wie beispielsweise Methyl-, Ethyl- n-Propyl- iso-Propyl-, n-Butyl-, iso-Butyl-, n-Pentyl-, iso-Pentyl, n-Hexyl-, n-Heptyl, n-Octyl-, iso-Octyl- oder Benzylrest.

Bevorzugt handelt es sich bei Rest M um Natrium, Kalium, Ammonium, Tetramethylammonium, Tetrabutylammonium, Benzyltriethylammonium, wobei Natrium und Ammonium besonders bevorzugt sind.

Beispiele für Reste $R^2$ sind $-(CH_2)_3S_2O_3Na$, $-(CH_2)_4S_2O_3Na$, $-(CH_2)_2C(CH_3)HS_2O_3NH_4$, $-(CH_2)_3S_2O_3N(CH_3)_4$, $-(CH_2)_4S_2O_3N(n\text{-}Bu)_4$, $-(CH_2)_5S_2O_3K$, $-(CH_2)_2C(CH_3)_2CH_2S_2O_3Na$ mit Bu gleich Butylrest, wobei $-(CH_2)_3S_2O_3Na$, $-(CH_2)_3S_2O_3NH_4$, $-(CH_2)_4S_2O_3Na$, $-(CH_2)_4S_2O_3NH_4$ bevorzugt und $-(CH_2)_3S_2O_3Na$ und $-(CH_2)_3S_2O_3NH_4$ besonders bevorzugt sind.

Bei den erfindungsgemäßen Buntesalzgruppen aufweisenden Organosiliciumverbindungen handelt es sich vorzugsweise um solche mit einem Molekulargewicht von 350 bis 15000.

Beispiele für die erfindungsgemäßen Buntesalzgruppen aufweisenden Organosiliciumverbindungen sind

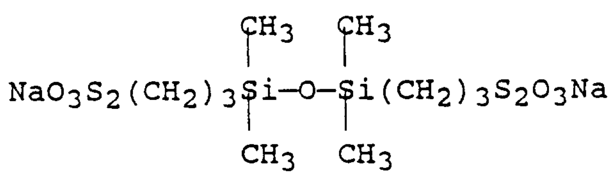

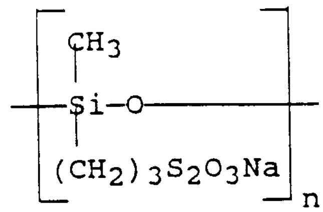

n = 4, 5, 6

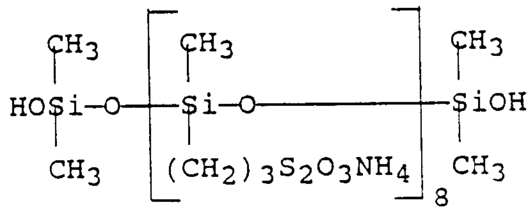

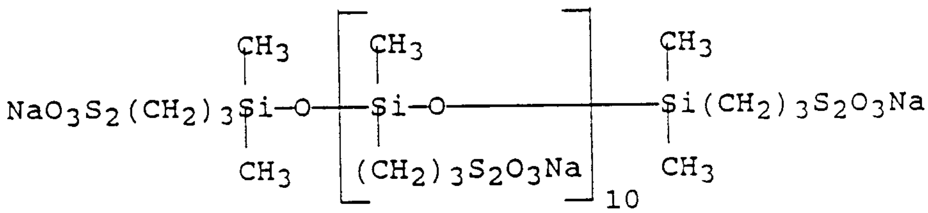

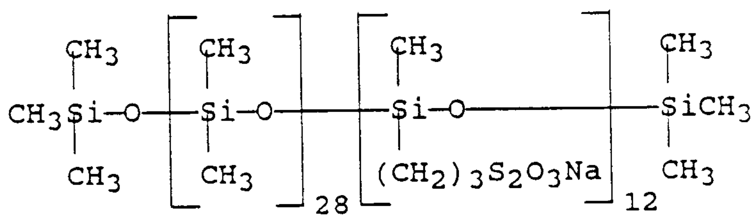

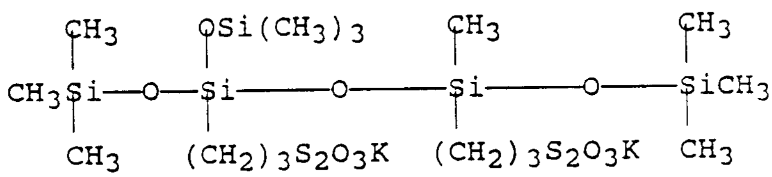

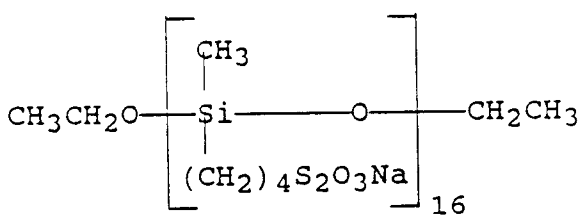

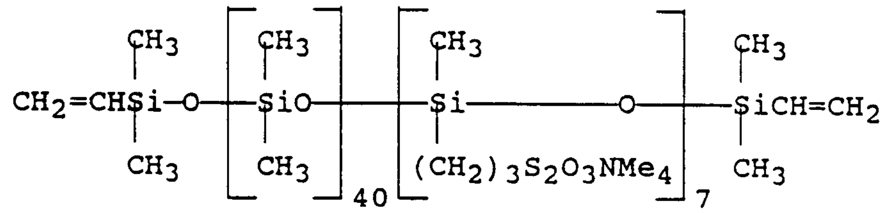

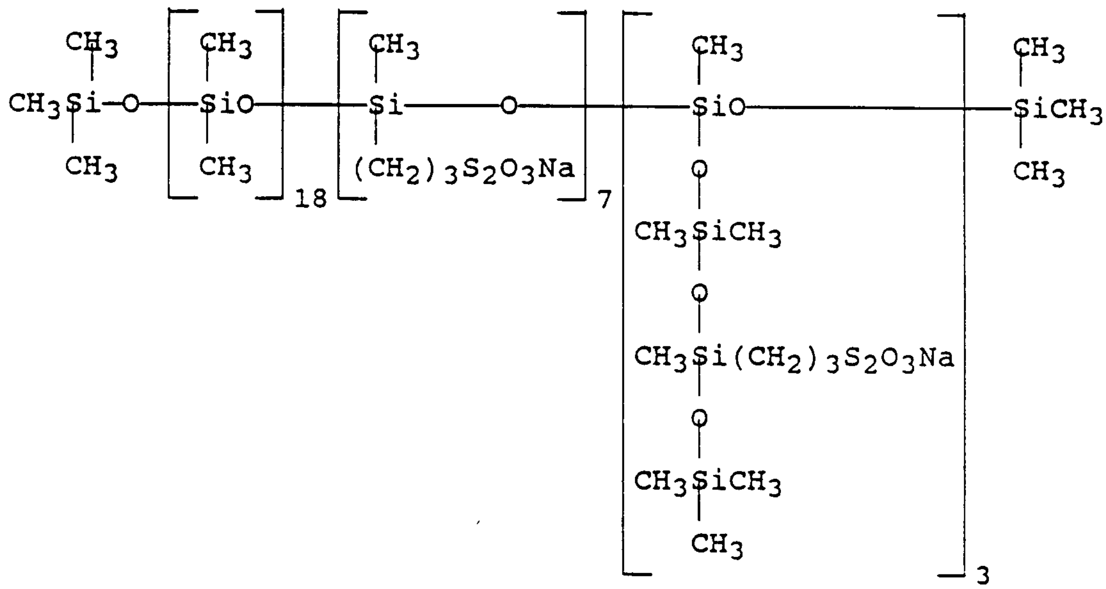

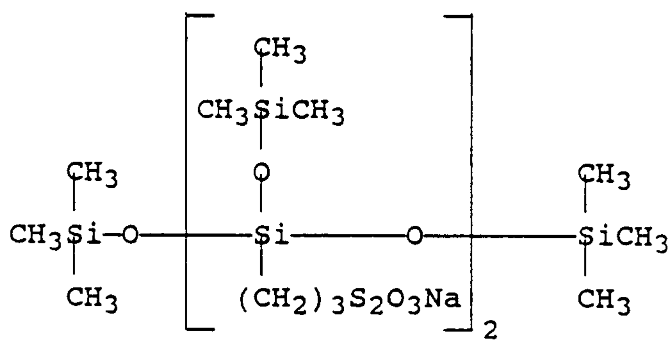

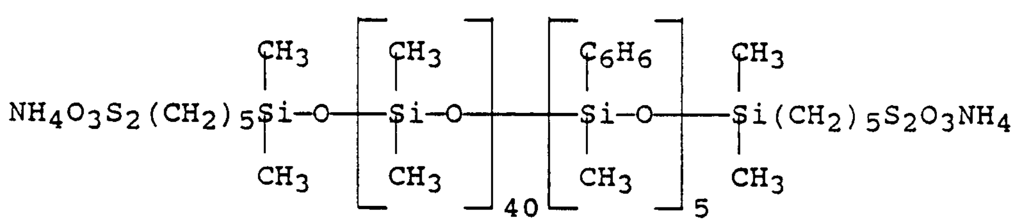

Die erfindungsgemäßen Buntesalzgruppen aufweisenden Organosiliciumverbindungen haben den Vorteil, daß sie keine der Buntesalzgruppe benachbarte Hydroxylgruppe aufweisen.

Ein weiterer Gegenstand der vorliegenden Erfindung ist ein Verfahren zur Herstellung von Buntesalzgruppen aufweisenden Organosiliciumverbindungen, dadurch gekennzeichnet, daß mindestens ein Silan der allgemeinen Formel

$R^3{}_dR^5{}_eSi(OR^4)_{4-d-e}$ (II)

und/oder dessen Teilhydrolysat,
wobei

$R^3$ gleich oder verschieden sein kann und eine für R angegebene Bedeutung hat,
$R^4$ gleich oder verschieden sein kann und eine für $R^1$ angegebene Bedeutung hat,
$R^5$ gleich oder verschieden sein kann und den Rest -Q'Y bedeutet mit Q' gleich zweiwertigem, gegebenenfalls substituiertem Kohlenwasserstoffrest, wobei Hydroxylgruppen als Substituenten ausgeschlossen sind, und Y gleich Halogenatom,
d 0, 1 oder 2, bevorzugt 1 oder 2, ist und
e 1, 2 oder 3, bevorzugt 1 oder 2, besonders bevorzugt 1, ist,

mit der Maßgabe, daß die Summe aus d und e kleiner oder gleich drei ist,
und gegebenenfalls mindestens ein Silan der Formel

$R^6{}_fSi(OR^7)_{4-f}$ (III)

und/oder dessen Teilhydrolysat,
wobei

$R^6$ gleich oder verschieden sein kann und eine für R angegebene Bedeutung hat,
$R^7$ gleich oder verschieden sein kann und eine für $R^1$ angegebene Bedeutung hat und
f 0, 1, 2 oder 3, bevorzugt 1, 2 oder 3, besonders bevorzugt 2 oder 3, ist,

mit mindestens einem Thioschwefelsäuresalz und Wasser umgesetzt wird.

Q' hat vorzugsweise eine für Q angegebene Bedeutung. Darüber hinaus kann Q' aber auch zweiwertige, substituierte Kohlenwasserstoffreste bedeuten, was aber nicht bevorzugt ist, wobei die Substituenten vorzugsweise hydrolyseunempfindlich sind und unter den Reaktionsbedingungen keine nucleophile Substitution mit Thiosulfat eingehen. Mit Hydroxylgruppen substituierte Kohlenwasserstoffreste sind ausgeschlossen.

Beispiel für Halogenatom Y ist Chlor, Brom oder Jod, wobei Y bevorzugt die Bedeutung von Chloratom hat.

Beispiele für im erfindungsgemäßen Verfahren eingesetztes Silan der Formel (II) sind $(CH_3)_2(CH_3O)Si(CH_2)_3Cl$, $(CH_3)_2(CH_3CH_2O)Si(CH_2)_3Cl$, $CH_3(CH_3O)_2Si(CH_2)_3Cl$, $CH_3(CH_3CH_2O)_2Si(CH_2)_3Cl$, $(CH_3O)_3Si(CH_2)_3Cl$, $(CH_3CH_2O)_3Si(CH_2)_3Cl$, $(CH_3)_2(CH_3O)Si(CH_2)_4Br$, $CH_3(CH_3CH_2O)_2Si(CH_2)_3I$, $(CH_3CH_2CH_2O)_3Si(CH_2)_3Br$, $CH_3(CH_3O)_2Si(CH_2)_3I$, $(CH_3CH_2CH_2O)_3Si(CH_2)_5Cl$, wobei $(CH_3)_2(CH_3O)Si(CH_2)_3Cl$, $(CH_3)_2(CH_3CH_2O)Si(CH_2)_3Cl$, $CH_3(CH_3O)_2Si(CH_2)_3Cl$ und $CH_3(CH_3CH_2O)_2Si(CH_2)_3Cl$ bevorzugt und $(CH_3)_2(CH_3O)Si(CH_2)_3Cl$ und $CH_3(CH_3O)_2Si(CH_2)_3Cl$ besonders bevorzugt ist.

Die Silane der Formel (II) sind handelsübliche Verbindungen bzw. können nach in der Silicium-Chemie gängigen Methoden hergestellt werden. So können zum Beispiel chloralkylfunktionelle Silane durch platinkatalysierte Hydrosilylierung von Allylchlorid mit den entsprechenden hydridofunktionellen Silanen hergestellt werden. Brom- und iodfunktionelle Silane sind auf analogem Wege zugänglich, werden jedoch bevorzugt aus den entsprechenden Chlorverbindungen durch Austausch des Halogenatoms gewonnen. Als vorteilhaft erweist sich dabei eine phasentransferkatalysierte Reaktionsführung, wie sie von Y. Goldberg, V. Dirnens und E. Lukevics in "Journal of Organometallic Chemistry Library", Bd. 20, 1988, Seite 219 bis 222 beschrieben ist.

Beispiele für im erfindungsgemäßen Verfahren gegebenenfalls eingesetztes Silan der Formel (III) sind $(CH_3)_3SiOH$, $(CH_3)_3SiOCH_3$, $(CH_3)_3Si(OCH_2CH_3)$, $(CH_3)_2Si(OCH_3)_2$, $(CH_3)_2Si(OCH_2CH_3)_2$, $CH_3Si(OCH_3)_3$, $CH_3Si(OCH_2CH_3)_3$, $Si(OCH_2CH_3)_4$, $(CH_2CH)Si(CH_3)(OCH_3)_2$, $(C_6H_5)_3SiOH$, $(CH_2CH)Si(CH_3)_2(OCH_3)$, wobei $(CH_3)_3SiOH$, $(CH_3)_3SiOCH_3$, $(CH_3)_3Si(OCH_2CH_3)$, $(CH_3)_2Si(OCH_3)_2$ und $(CH_3)_2Si(OCH_2CH_3)_2$ bevorzugt und $(CH_3)_3SiOCH_3$ und $(CH_3)_2Si(OCH_3)_2$ besonders bevorzugt sind.

Bei dem erfindungsgemäßen Verfahren wird Silan der Formel (III) vorzugsweise in Mengen von 0 bis 1000 Gewichtsprozent, besonders bevorzugt 0 bis 500 Gewichtsprozent, jeweils bezogen auf das Gesamtgewicht an eingesetztem Silan der Formel (II), eingesetzt.

Bei den im erfindungsgemäßen Verfahren eingesetzten Thioschwefelsäuresalzen handelt es sich vorzugsweise um bei 100°C und 1013 hPa in Wasser zumindest zu 10 Gew.-% lösliche Verbindungen der Formel

$$M'_2S_2O_3 \quad (V),$$

wobei M` gleich oder verschieden sein kann und eine für M angegebene Bedeutung hat, wobei Natriumthiosulfat und Ammoniumthiosulfat besonders bevorzugt sind, insbesondere Natriumthiosulfat.

Beispiele für im erfindungsgemäßen Verfahren eingesetzte Thioschwefelsäuresalze sind $Na_2S_2O_3$, $Na_2S_2O_3.5H_2O$, $(NH_4)_2S_2O_3$, $(NMe_4)_2S_2O_3$ und $(NMeH_3)_2S_2O_3$ mit Me gleich Methylrest.

Bei dem erfindungsgemäßen Verfahren wird Thioschwefelsäuresalz in Mengen von bevorzugt 1 Mol bis 2 Mol, besonders bevorzugt 1 Mol bis 1,3 Mol, insbesondere 1,1 Mol, jeweils bezogen auf ein Mol Rest Y im erfindungsgemäß eingesetzten Silan der Formel (II), eingesetzt. Ein Mol Thioschwefelsäuresalz pro Mol Rest Y des erfindungsgemäß eingesetzten Silans der Formel (II) ist im allgemeinen völlig ausreichend, um eine homogene Reaktionsmasse und einen vollständigen Umsatz der Reste Y zu erzielen. Mit einem Thiosulfatüberschuß wird jedoch schneller ein vollständiger Umsatz der Reste Y erreicht.

Bei dem erfindungsgemäßen Verfahren wird Wasser vorzugsweise in Mengen von 100 bis 700 Gewichtsprozent, besonders bevorzugt 150 bis 350 Gewichtsprozent, jeweils bezogen auf das Gewicht an Silan der Formel (II), eingesetzt.

Des weiteren kann bei dem erfindungsgemäßen Verfahren noch zusätzlich wasserlösliches, im wesentlichen neutral reagierendes organisches Lösungsmittel, bevorzugt in Mengen von 0 bis 100 Gewichtsprozent, besonders bevorzugt von 0 bis 50 Gewichtsprozent, jeweils bezogen auf das Gewicht an Wasser, eingesetzt werden.

Bei dem erfindungsgemäßen Verfahren wird vorzugsweise Thioschwefelsäuresalz im Gemisch mit Wasser und gegebenenfalls wasserlöslichem organischen Lösungsmittel eingesetzt.

Beispiele für geeignete wasserlösliche, im wesentlichen neutral reagierende organische Lösungsmittel sind Alkohole, wie Methanol, Ethanol, Isopropanol, Ethylenglykol und dipolare aprotische Lösungsmittel, wie Ethylenglykoldimethylether, Diethylenglykoldimethylether, 1,4-Dioxan, N,N-Dimethylformamid und Tetrahydrofuran sowie deren Gemische, wobei Ethanol, Isopropanol, Ethylenglykoldimethylether und Dimethylformamid bevorzugt und Ethanol besonders bevorzugt ist.

Bei dem erfindungsgemäßen Verfahren werden Silan der Formel (II), gegebenenfalls Silan der Formel (III), Thioschwefelsäuresalz, Wasser und gegebenenfalls wasserlösliches organisches Lösungsmittel in beliebiger Reihenfolge miteinander vermischt.

Das erfindungsgemäße Verfahren wird vorzugsweise bei einer Temperatur von 20 °C bis 110 °C, besonders bevorzugt 70 bis 100 °C, und einem Druck zwischen bevorzugt 900 und 1100 hPa durchgeführt. Das erfindungsgemäße Verfahren kann jedoch auch bei höheren oder niedrigeren Drücken durchgeführt werden.

Bei einer bevorzugten Ausführungsform des erfindungsgemäßen Verfahrens werden Silan der Formel (II) gegebenenfalls im Gemisch mit Silan der Formel (III) mit einem Gemisch aus Thioschwefelsäuresalz, Wasser und gegebenenfalls wasserlöslichem organischen Lösungsmittel vermengt und intensiv gerührt.

Nach Beendigung der erfindungsgemäßen Umsetzung kann die Buntesalzgruppen aufweisende Organosiliciumverbindung nach in der Chemie allgemein bekannten Verfahren isoliert werden.

Vorzugsweise wird nach Beendigung der erfindungsgemäßen Umsetzung das Reaktionsgemisch eingedampft und der Rückstand mit einem polaren, im wesentlichen neutral reagierenden organischen Lösungsmittel, welches bis zu 5 Gewichtsprozent, bezogen auf das Gewicht des organischen Lösungsmittels, Wasser enthalten kann, extrahiert. Das Eindampfen wird vorzugsweise bei einer Temperatur von 20 bis 120 °C, besonders bevorzugt 50 bis 100 °C, und einem Druck von 0,01 bis 50 hpa, besonders bevorzugt 0,1 bis 10 hPa, durchgeführt. Bei dem polaren organischen Lösungsmittel handelt es sich bevorzugt um Ethanol oder Isopropanol mit einem Wassergehalt von 2 bis 5 Prozent. Nach Abdampfen des polaren organischen Lösungsmittels wird die Buntesalzgruppen aufweisende Organosiliciumverbindung je nach Zusammensetzung als Feststoff, pastöse oder ölige Masse erhalten.

Das erfindungsgemäße Verfahren hat den Vorteil, daß auf relativ einfache Art und Weise Buntesalzgruppen aufweisende Organosiliciumverbindungen in hoher Ausbeute hergestellt werden können. Des weiteren hat das erfindungsgemäße Verfahren den Vorteil, daß die Ausgangsstoffe kostengünstig und leicht verfügbar sind.

Die nach Beendigung der erfindungsgemäßen Umsetzung erhaltene Buntesalzgruppen aufweisende Organosiliciumverbindung kann, falls erwünscht, mit mindestens einem Organo(poly)siloxan (1) äquilibriert werden, was jedoch nicht bevorzugt ist. Die Äquilibrierung kann nach in der Siliciumchemie üblichen Verfahren durchgeführt werden.

Als Organo(poly)siloxan (1), mit dem die erfindungsgemäß hergestellte Organosiliciumverbindung gegebenenfalls äquilibriert wird, werden vorzugsweise solche aus Einheiten der allgemeinen Formel

$$R^9_g(R^{10}O)_hSiO_{(4-g-h)/2} \quad (VI),$$

wobei

$R^9$ gleich oder verschieden sein kann und eine für R angegebene Bedeutung hat,

$R^{10}$ gleich oder verschieden sein kann und eine für $R^1$angegebene Bedeutung hat,

g 1, 2 oder 3 und

h 0, 1 oder 2 ist,

mit der Maßgabe, daß die Summe aus g und h kleiner oder gleich 3 ist,
eingesetzt.

Beispiele für Organo(poly)siloxane (1) sind lineare, endständige Triorganosiloxygruppen aufweisende Organo(poly)siloxane mit 2 bis 100 Silicium-Einheiten, lineare, endständige Hydroxylgruppen aufweisende Organo(poly)siloxane mit 2 bis 100 Silicium-Einheiten und cyclische Organo(poly)siloxane mit 3 bis 12 Silicium-Einheiten.

Die Mengen und Art des in der gegebenenfalls durchgeführten Äquilibrierungsstufe des erfindungsgemäßen Verfahrens eingesetzten Organo(poly)siloxans (1) wird lediglich durch den gewünschten Anteil an Buntesalzgruppen in der in der gegebenenfalls durchgeführten Äquilibrierungsstufe des erfindungsgemäßen Verfahrens erzeugten Organosiliciumverbindung und durch die gewünschte mittlere Kettenlänge bestimmt.

Die gegebenenfalls durchgeführte Äquilibrierung wird vorzugsweise in Anwesenheit von die Äquilibrierung fördernden Katalysatoren durchgeführt. Beispiele für solche Katalysatoren sind basische Katalysatoren, wie beispielsweise Alkalihydroxide, wie Natriumhydroxid und Kaliumhydroxid, Trimethylbenzylammoniumhydroxid und Tetramethylammoniumhydroxid, sowie saure Katalysatoren, wie zum Beispiel Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat, wobei basische Katalysatoren bevorzugt und davon KOH, Tetramethylammoniumhydroxid und Trimethylbenzylammoniumhydroxid besonders bevorzugt sind.

Äquilibrierungskatalysator wird dabei vorzugsweise in Mengen von 0,01 bis 0,5 Gewichtsprozent, insbesondere 0,02 bis 0,1 Gewichtsprozent, jeweils bezogen auf das Gesamtgewicht der eingesetzten Organosiliciumverbindungen, verwendet.

Die gegebenenfalls durchgeführte Äquilibrierung wird vorzugsweise bei 80 °C bis 150 °C und beim Druck der umgebenden Atmosphäre, also zwischen 900 und 1100 hPa durchgeführt. Falls erwünscht, können aber auch höhere oder niedrigere Drücke angewendet werden.

Des weiteren können die erfindungsgemäßen Buntesalzgruppen aufweisenden Organosiliciumverbindungen, sofern sie $OR^1$-Gruppen mit $R^1$ gleich obengenannter Bedeutung aufweisen, der Hydrolyse bzw. Kondensation unterworfen werden. Hydrolyse bzw. Kondensation von Organosiliciumverbindungen mit Organyloxygruppen sind bereits vielfach bekannt. Beispielsweise können die erfindungsgemäßen Organosiliciumverbindungen mit Hydroxylgruppen aufweisenden linearen oder cyclischen Organosiliciumverbindungen, wie zum Beispiel $\alpha,\omega$-Dihydroxydimethylpolysiloxan, in Anwesenheit von Katalysator, wie zum Beispiel Organozinnverbindungen, Titan- und Zirkonester, quartären Stickstoffbasen, sowie Mineralsäuren, und gegebenenfalls in Anwesenheit von Lösungsmittel umgesetzt werden. Hydrolyse und Kondensation werden dabei vorzugsweise zwischen 23 und 150 °C, besonders bevorzugt zwischen 60 und 120 °C und einem Druck zwischen 900 und 1100 hPa durchgeführt.

Das erfindungsgemäße Verfahren kann absatzweise, halbkontinuierlich oder vollkontinuierlich durchgeführt werden.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Die erfindungesgemäßen Buntesalzgruppen aufweisenden Organosiliciumverbindungen können für alle Zwecke eingesetzt werden, für die auch bisher Buntesalzgruppen aufweisende Organosiliciumverbindungen eingesetzt worden sind. Hierzu sei beispielsweise auf die bereits oben zitierten Veröffentlichungen DE 33 23 881 A1 (Th. Goldschmidt AG; ausgegeben am 10. Januar 1985) und DE 37 35 086 C1 (Th. Goldschmidt AG; ausgegeben am 2. Februar 1989) verwiesen, wobei die dort genannten Anwendungsmöglichkeiten zum Inhalt der hier beschriebenen Erfindung zu rechnen sind. So können die erfindungsgemäßen Buntesalzgruppen aufweisenden Organosiliciumverbindungen in Verfahren zur Oberflächenbehandlung anorganischer und organischer Materialien eingesetzt werden. Beispielsweise lassen sich textile Oberflächen dauerhaft hydrophobieren, indem darauf aufgebrachte erfindungsgemäße Buntesalzgruppen aufweisende Organosiliciumverbindungen durch Zugabe von Sulfiden bei Raumtemperatur unter Ausbildung von Disulfidbrücken vernetzt werden.

Die Anwendungsmöglichkeiten der erfindungsgemäßen Buntesalzgruppen aufweisenden Organosiliciumverbindungen beruhen hauptsächlich zum einen auf ihrer Polarität und zum anderen auf der hohen Reaktivität der in der Buntesalzgruppe vorliegenden Schwefel-Schwefel-Bindung. Ist der Anteil an Buntesalzgruppen in der erfindungsgemäßen Organosiliciumverbindung genügend hoch, so lösen sich die Verbindungen klar in Wasser und erniedrigen die Oberflächenspannung des Wassers, da die erfindungsgemäßen Buntesalzgruppen aufweisenden Organosiliciumverbindungen aufgrund ihrer hydrophoben und hydrophilen Molekülteile tensidischen Charakter besitzen.

Des weiteren können die erfindungsgemäßen Buntesalzgruppen aufweisenden Organosiliciumverbindungen in Verfahren zur Herstellung von mercaptofunktionellen Organosiliciumverbindungen eingesetzt werden.

Die hydrolytische Umsetzung von Buntesalzgruppen in Mercaptogruppen, welche im allgemeinen durch Säure katalysiert wird, ist allgemein bekannt und verläuft nach der Gleichung Rest-$S_2O_3^-$ + $H_2O$ ----> Rest-SH + $HSO_4^-$. Hierzu sei beispielsweise auf A. Schöberl und A. Wagner: "Herstellung und Umwandlung von Mercaptanen und Thiophenolen", in Houben-Weyl, Bd. 9, S. 18f und darin zitierte Literatur verwiesen.

Ein weiterer Gegenstand der vorliegenden Erfindung ist ein Verfahren zur Herstellung von mercaptofunktionellen Organosiliciumverbindungen, dadurch gekennzeichnet, daß Buntesalzgruppen aufweisende Organosiliciumverbindungen gemäß Anspruch 1 oder herstellbar nach Anspruch 2 in Anwesenheit von Wasser und Säure umgesetzt werden.

Besonders bevorzugt handelt es sich bei den im erfindungsgemäßen Verfahren zur Herstellung von mercaptofunktionellen Organosiliciumverbindungen eingesetzten erfindungsgemäßen Buntesalzgruppen aufweisenden Organosiliciumverbindungen aus Einheiten der Formel (I) um solche, die nach dem erfindungsgemäßen Verfahren durch Umsetzung von Silan der Formel (II), gegebenenfalls Silan der Formel (III), Thioschwefelsäuresalz und Wasser hergestellt werden.

Beispiele für die eingesetzte Säure sind HCl, HBr, $H_2SO_4$,$H_3PO_4$, $CH_3CO_2H$, $CH_3SO_3H$, $CF_3SO_3H$ und

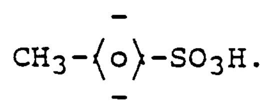

Bei der im erfindungsgemäßen Verfahren zur Herstellung mercaptofunktioneller Organosiliciumverbindungen eingesetzten Säure handelt es sich vorzugsweise um HCl, $H_3PO_4$ und

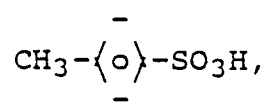

wobei HCl besonders bevorzugt eingesetzt wird.

Bei dem erfindungsgemäßen Verfahren zur Herstellung mercaptofunktioneller Organosiliciumverbindungen wird Säure vorzugsweise in Mengen von 1 bis 75 Gewichtsprozent, besonders bevorzugt 10 bis 40 Gewichtsprozent, jeweils bezogen auf das Gesamtgewicht an eingesetzter Buntesalzgruppen aufweisender Organosiliciumverbindung der Formel (I), eingesetzt.

Vorzugsweise wird beim erfindungsgemäßen Verfahren Säure im Gemisch mit Wasser in Konzentrationen von bevorzugt 2 bis 50 Gew.-%, besonders bevorzugt 25 bis 40 Gew.-%, jeweils bezogen auf das Gewicht des Gemisches an Wasser und Säure, eingesetzt. Die Säure kann jedoch auch in höherer Konzentration oder in Reinform zugegeben werden, wenn das Reaktionsgemisch bereits Wasser enthält, wenn also beispielsweise das Reaktionsgemisch der Buntesalzsynthese nicht oder nicht vollständig eingedampft wurde. Vorzugsweise enthält das Gemisch aus Säure und Wasser zusätzlich wasserlösliches organisches Lösungsmittel in Mengen von bevorzugt 100 bis 2000 Gewichtsprozent, besonders bevorzugt 800 bis 1500 Gewichtsprozent, jeweils bezogen auf das Gewicht von Wasser.

Beispiele für das gegebenenfalls eingesetzte wasserlösliche organische Lösungsmittel sind die dafür oben angegebenen Beispiele, wobei Methanol, Ethanol, Isopropanol und Ethylenglykol bevorzugt sind und Ethanol besonders bevorzugt ist.

Bei dem erfindungsgemäßen Verfahren zur Herstellung mercaptofunktioneller Organosiliciumverbindungen können zusätzlich weitere Stoffe, wie beispielsweise Reduktionsmittel, Organo(poly)siloxane aus Einheiten der Formel (VI), oder Silane der Formel (III) eingesetzt werden.

Die Mitverwendung von Reduktionsmittel ist bevorzugt, wodurch die Bildung von Disulfid als Nebenreaktion bei der Herstellung von Thiolen aus Buntesalzgruppen weitgehend vermieden werden kann.

Beispiele für gegebenenfalls eingesetzte Reduktionsmittel sind Zink, Eisen, Magnesium, Natriumdithionit, Hydroxylaminhydrochlorid, Hydraziniumsulfat und Natriumphosphit, wobei es sich bevorzugt um Zink, Magnesium und Hydroxylaminhydrochlorid und besonders bevorzugt um Zink handelt.

Beispiele für gegebenenfalls eingesetzte Organo(poly)siloxane aus Einheiten der Formel (VI) sowie Silane der Formel (III) sind hydroxy-, methoxy- oder ethoxyterminiertes Dimethylpolysiloxan mit einer durchschnittlichen Kettenlänge von 2 bis 150, wobei solche mit einer durchschnittlichen Kettenlänge von 5 bis 100 bevorzugt und solche mit einer durchschnittlichen Kettenlänge von 10 bis 30 besonders bevorzugt sind, Hexamethyldisiloxan, 1,3-Divinyl-1,1,3,3-tetramethyldisiloxan, Trimethylmethoxysilan, Dimethyldiethoxysilan, sowie Gemische dieser Silane und Siloxane.

Das erfindungsgemäße Verfahren zur Herstellung von mercaptofunktionellen Organosiliciumverbindungen wird vorzugsweise bei einer Temperatur von 30 bis 110 °C, besonders bevorzugt 60 bis 100 °C, und einem Druck zwischen bevorzugt 900 und 1100 hPa durchgeführt. Das erfindungsgemäße Verfahren kann jedoch auch bei höheren oder niedrigeren Drücken durchgeführt werden.

Bei den einzelnen im erfindungsgemäßen Verfahren zur Herstellung von mercaptofunktionellen Organosiliciumverbindungen eingesetzten Bestandteilen kann es sich jeweils um eine Art derartiger Bestandteile wie auch um ein Gemisch aus mindestens zwei Arten derartiger Bestandteile handeln.

Das erfindungsgemäße Verfahren zur Herstellung von mercaptofunktionellen Organosiliciumverbindungen hat den Vorteil, daß mercaptofunktionelle Organosiliciumverbindungen in einfacher Weise und mit hohen Ausbeuten erhalten werden. Dies gilt auch dann, wenn als Buntesalzgruppen aufweisende Siliciumverbindungen der Formel (I) solche eingesetzt werden, in denen alle Silicium-Einheiten Buntesalzgruppen aufweisen, bzw. die hydrolytische Umsetzung in Gegenwart von Organosiliciumverbindungen aus Einheiten der allgemeinen Formeln (III) und (VI) durchgeführt wird.

Bei einer bevorzugten Ausführungsform des erfindungsgemäßen Verfahrens zur Herstellung von mercaptofunktionellen Organosiliciumverbindungen wird

in einer 1. Stufe

mindestens ein Silan der allgemeinen Formel (II) und/oder dessen Teilhydrolysat und gegebenenfalls mindestens ein Silan der Formel (III) und/oder dessen Teilhydrolysat mit mindestens einem Thioschwefelsäuresalz und Wasser umgesetzt,

in einer 2. Stufe nach Beendigung der 1. Stufe die Reaktionsmischung gegebenenfalls ganz oder teilweise eingedampft sowie

in einer 3. Stufe der in der 2. Stufe erhaltene Rückstand mit Säure, Wasser und gegebenenfalls weiteren Stoffen umgesetzt.

Auf eine Wasserzugabe in der 3. Stufe kann verzichtet werden, wenn die Reaktionsmischung in der 2. Stufe nicht vollständig eingedampft wird, sondern die für die 3. Stufe erforderliche Wassermenge in der Mischung verbleibt.

Die verschiedenen Stufen des erfindungsgemäßen Verfahrens zur Herstellung von mercaptofunktionellen Organosiliciumverbindungen können in ein und demselben Reaktionsgefäß hintereinander oder in voneinander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Nach Beendigung der erfindungsgemäßen Umsetzung können die erfindungsgemäßen mercaptofunktionellen Organosiliciumverbindungen auf bekannte Art und Weise isoliert werden. Die Isolierung der mercaptofunktionellen Organosiliciumverbindungen kann beispielsweise so erfolgen, daß das Reaktionsgemisch mit einem nicht mit Wasser mischbaren organischen Lösungsmittel, wie beispielsweise Benzol, Toluol, o-, m-, p-Xylol, Pentan, Cyclohexan, bevorzugt Toluol, versetzt wird, in dem die erfindungsgemäßen mercaptofuntionellen Organosiliciumverbindungen gut löslich sind. Die Lösungsmittelmenge beträgt vorzugsweise 10 bis 150 Gewichtsprozent, besonders bevorzugt 30 bis 100 Gewichtsprozent, jeweils bezogen auf das Gesamtgewicht von eingesetztem Wasser und gegebenenfalls wasserlöslichem organischen Lösungsmittel. Die organische, wasserunlösliche Phase kann von der wäßrigen Phase abgetrennt werden. Zur Isolierung der mercaptofunktionellen Organosiliciumverbindungen wird die organische Phase bei einer Temperatur von vorzugsweise 30 bis 150 °C, besonders bevorzugt 80 bis 120 °C und einem Druck zwischen vorzugsweise 1 und 100 Pa, besonders bevorzugt 10 bis 50 Pa, eingedampft. Verbindungen niedrigen Molekulargewichts, wie beispielsweise 1,3-Bis(3-mercaptopropyl)-1,1,3,3-tetramethyldisiloxan, können destillativ isoliert werden.

Die erfindungsgemäßen mercaptofuntionellen Organosiliciumverbindungen können, falls erwünscht, in der gleichen Weise wie für die erfindungsgemäßen Buntesalzgruppen aufweisenden Organosiliciumverbindungen oben beschrieben mit Organo(poly)siloxanen (1) äquilibriert werden. Als Äquilibrierungskatalysator werden dabei vorzugsweise $H_2SO_4$ und schwefelsäurehaltige Verbindungen, wie schwefelsauer aufgeschlossene Silicate oder Sulfonsäuren, wie $CF_3SO_3H$, insbesondere schwefelsäurehaltiger Montmorillonit,

eingesetzt.

Die erfindungsgemäßen mercaptofunktionellen Organosiliciumverbindungen können für alle Zwecke eingesetzt werden, für die auch bisher mercaptofunktionelle Organosiliciumverbindungen eingesetzt worden sind. So können die erfindungsgemäßen mercaptofunktionellen Organosiliciumverbindungen beispielsweise als Vernetzer in Thiol-En-Systemen eingesetzt werden. Hierzu sei zum Beispiel auf US 4,808,638 (Loctite Corp.; ausgegeben am 28. Februar 1989) verwiesen. Des weiteren können Acrylatharze mit Hilfe mercaptofuntioneller Organosiliciumverbindungen unter basischer Katalyse thermisch rasch zu festen Überzügen auf verschiedenen Substraten ausgehärtet werden. Hierzu sei beispielsweise auf EP 401 683 A (Wacker-Chemie GmbH; ausgegeben am 12. Dezember 1990) verwiesen. Thiol-En-Systeme eignen sich weiterhin ausgezeichnet zur Herstellung von durch energiereiche Strahlung, insbesondere UV-Licht, vernetzbaren Überzügen auf Papier zur Abweisung klebriger Stoffe, wie in US 4,070,526 (Dow Corning Corp.; ausgegeben am 24.Januar 1978) beschrieben. Die nach dem erfindungsgemäßen Verfahren hergestellten mercaptofunktionellen Organosiliciumverbindungen lassen sich auch in Abwesenheit olefinischer Komponenten zu Dichtungsmassen oder Harzen polymerisieren. Hierzu sei zum Beispiel auf US 4,070,329 (Dow Corning Corp.; ausgegeben am 24. Januar 1978), US 4,070,328 (Dow Corning Corp.; ausgegeben am 24. Januar 1978) und US 4,133,939 (Dow Corning Corp.; ausgegeben am 24. Januar 1978) verwiesen.

Die erfindungsgemäßen mercaptofunktionellen Organosiliciumverbindungen können weiterhin als Zusatz in Haftvermittler- oder Polishformulierungen und generell zur Modifizierung von Organopolysiloxanen verwendet werden.

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Es werden die folgenden Abkürzungen verwendet:

Me: Methylrest

Et: Ethylrest

**Beispiel 1**

Eine Mischung von 20 g 3-Chlorpropyldimethylmethoxysilan (0,120 mol) und 32,7 g Natriumthiosulfat-5-hydrat in 100 ml Wasser wird bei 100 °C 7 Stunden intensiv gerührt. Anschließend wird die Lösung im Wasserstrahlvakuum bei 60 °C eingedampft und der zurückbleibende Feststoff zweimal mit 100 ml siedendem Ethanol (enthält 4 % Wasser) extrahiert. Die vereinigten Extrakte werden bei 70 °C im Wasserstrahlvakuum eingeengt, dann im Ölpumpenvakuum (20 Pa) bei 100 °C ausgeheizt. Als Rückstand verbleiben 27,6 g farbloser Feststoff, der zu ca. 95 % aus dem Disiloxan der Formel

$O[Me_2Si(CH_2)_3S_2O_3Na]_2$

besteht. Die Gesamtausbeute der Umsetzung liegt damit bei 90 %.

**Beispiel 2**

20 g 3-Chlorpropylmethyldimethoxysilan (0,109 mol) werden mit einer Lösung von 29,9 g Natriumthiosulfat-5-hydrat in 85 ml Wasser vermischt und unter intensivem Rühren zum Sieden erhitzt. Nach ca. 4 Stunden ist das Reaktionsgemisch homogen und die Umsetzung beendet. Die Lösung wird im Wasserstrahlvakuum bei 60 °C eingedampft und der dabei erhaltene Feststoff anschließend in einer Soxhletapparatur 8 Stunden lang mit Ethanol (enthält 4 % Wasser) extrahiert. Nach dem Abdampfen des Lösungsmittels im Ölpumpenvakuum (20 Pa) bei 80 °C bleiben 24,6 g farbloser Feststoff zurück, der zu über 96 % aus Einheiten der Formel

$OSiMe(CH_2)_3S_2O_3Na$

besteht, was einer Ausbeute von 91 % entspricht.

**Beispiel 3**

Eine Mischung von 15 g 3-Chlorpropylmethyldiethoxysilan (0,071 mol), 13 g Trimethylsilanol und 12,4 g Natriumthiosulfat in 50 ml Wasser und 20 ml Ethanol wird 6 Stunden unter intensivem Rühren am Rückfluß gekocht. Beim Abkühlen auf Raumtemperatur separieren sich zwei Phasen. Die spezifisch leichtere Phase, die hauptsächlich aus Hexamethyldisiloxan, Ethoxytrimethylsilan und Ethanol besteht, wird verworfen. Die untere, wäßrige Phase wird im Wasserstrahlvakuum bei 60 °C eingedampft. Der zurückbleibende Feststoff wird dreimal mit je 50 ml Ethanol (Wassergehalt 4 %) extrahiert, die vereinigten Extrakte werden dann im Wasserstrahlvakuum eingeengt und der Rückstand im Ölpumpenvakuum (20 Pa) bei 80 °C ausgeheizt. Dabei werden 17,6 g weißer Feststoff der durchschnittlichen Zusammensetzung

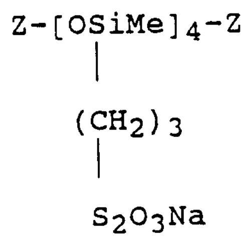

erhalten, wobei 90 % der Stoppereinheiten Z eine $Me_3SiO_{1/2}$-Gruppe und 10 % eine $Me_2(EtO)SiO_{1/2}$-Gruppe sind.

**Beispiel 4**

10 g 3-Chlorpropylmethyldiethoxysilan (0,047 mol), 35 g Dimethyldiethoxysilan und 4,5 g Trimethylsilanol werden zu einer Lösung von 8 g Natriumthiosulfat in 100 ml Wasser und 50 ml Ethanol gegeben und die Mischung bei 100 °C 6 Stunden intensiv gerührt. Anschließend wird auf Raumtemperatur abgekühlt, wobei sich zwei Phasen bilden. Die obere, vorwiegend aus nicht-funktionellen Polydimethylsiloxanen und Ethanol bestehende Phase wird abgetrennt und verworfen. Die Wasserphase wird im Wasserstrahlvakuum bei 60 °C eingeengt und das so erhaltene Feststoff/Öl-Gemisch zweimal mit je 50 ml Ethanol extrahiert. Nach dem Eindampfen der vereinigten Extrakte bei 80 °C und 20 Pa erhält man 20,1 g leicht trübes, hochviskoses Öl der durchschnittlichen Zusammensetzung

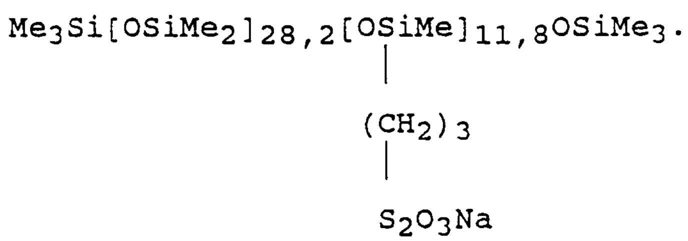

**Beispiel 5**

10 ml einer 37 %igen Lösung von Salzsäure in Wasser werden innerhalb von 30 Minuten zu einer Dispersion von 9,6 g Buntesalzgruppen aufweisenden Organosiliciumverbindung aus Beispiel 1 und 2 g Zinkstaub in 100 ml siedendem Ethanol getropft. Nach Beendigung der Säurezugabe wird noch 2 Stunden unter Rückfluß gerührt. Anschließend wird die Reaktionsmischung auf Raumtemperatur abgekühlt und mit jeweils 50 ml Wasser und Toluol versetzt. Nach intensivem Durchmischen wird die organische Phase abgetrennt und zunächst im Wasserstrahlvakuum, dann im Ölpumpenvakuum (25 Pa) bei 50 °C eingeengt. Die zurückbleibende farblose Flüssigkeit wird bei einem Druck von 25 Pa fraktionierend destilliert, wobei die Hauptfraktion (4,7 g) im Temperaturbereich von 87-89 °C siedet. Die Substanz ist das erwartete mercaptofunktionelle Disiloxan der Formel

$O[Me_2Si(CH_2)_3SH]_2$.

Unter Berücksichtigung des Buntesalzgehalts der eingesetzten Ausgangsverbindung (ca. 95 %) beträgt die Ausbeute 89 %.

**Beispiel 6**

Eine Mischung von 20 g 3-Chlorpropyldimethylmethoxysilan (0,120 mol) und 19 g Natriumthiosulfat in 100 ml Wasser wird unter heftigem Rühren 4 Stunden am Rückfluß gekocht, dann bei 80 °C im Wasserstrahlvakuum eingedampft. Der feste Rückstand wird mit 150 ml Ethanol, 3 g Zinkstaub und 97 g eines hydroxylterminierten Polydimethylsiloxans der durchschnittlichen Kettenlänge 15 versetzt. Die Mischung wird zum Sieden erhitzt, dann werden innerhalb von 15 Minuten 10 ml 37 %ige Salzsäure in Wasser zudosiert. Anschließend wird noch weitere 2 Stunden in der Siedehitze gerührt. Nach Abkühlung auf Raumtemperatur wird das Reaktionsgemisch mit je 70 ml Toluol und Wasser versetzt, die spezifisch leichtere organische Phase abgetrennt und zunächst im Wasserstrahlvakuum eingeengt, dann im Ölpumpenvakuum bei 100 °C und 10 Pa von allen flüchtigen Bestandteilen befreit. Zurück bleiben 106,7 g farbloses Öl (Viskosität: 39 $mm^2s^{-1}$) der durchschnittlichen Zusammensetzung

$HS(CH_2)_3SiMe_2[OSiMe_2]_{21,4}OSiMe_2(CH_2)_3SH$ .

**Beispiel 7**

50 g 3-Chlorpropylmethyldimethoxysilan (0,274 mol) und 43,5 g Natriumthiosulfat in 250 ml Wasser werden in der Siedehitze intensiv gerührt. Nach 3 Stunden, wenn die anfangs zweiphasige Mischung völlig homogen ist, wird die Umsetzung beendet und das Reaktionsgemisch bei 80 °C im Wasserstrahlvakuum eingedampft. Der Rückstand wird zusammen mit 100 g hydroxylterminiertem Polydimethylsiloxan der durchschnittlichen Kettenlänge 15, 14,5 g Hexamethyldisiloxan und 5 g Zinkstaub in 400 ml Ethanol dispergiert. Die Mischung wird zum Sieden erhitzt und bei dieser Temperatur innerhalb von 20 Minuten mit 40 ml 37 %iger Salzsäure in Wasser versetzt. Nach weiteren 2 Stunden Rückflußkochen wird auf Raumtemperatur abgekühlt. Die Aufarbeitung erfolgt analog zu Beispiel 6, wobei je 250 ml Wasser und Toluol zugegeben werden. Nach Phasentrennung und Eindampfen der organischen Phase werden 141,2 g farbloses Öl (Viskosität: 26,1 $mm^2s^{-1}$) erhalten, dessen durchschnittliche Zusammensetzung durch folgende Formel wiedergegeben wird:

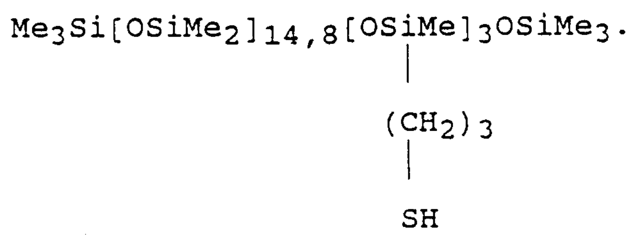

**Beispiel 8**

50 g des mercaptofunktionellen Organopolysiloxans aus Beispiel 7 werden mit 75 g Dimethylcyclotetrasiloxan und 2,5 g eines mit Schwefelsäure aufgeschlossenen Silicats (Montmorillonit) als Äquilibrierungskatalysator ($H_2SO_4$-Gehalt: 8 %) versetzt und 8 Stunden bei 100 °C gerührt. Anschließend wird auf Raumtemperatur abgekühlt und der Katalysator mit 0,5 g Natriumhydrogencarbonat, das vorher noch mit 0,1 ml Wasser befeuchtet worden ist, neutralisiert. Nach Filtration und Ausheizen des Filtrats im Ölpumpenvakuum (20 Pa) bei 110 °C erhält man 120,2 g farbloses Öl der durchschnittlichen Zusammensetzung

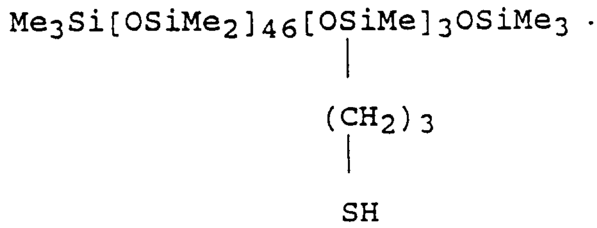

### Beispiel 9

Analog zu der in Beispiel 7 beschriebenen Arbeitsweise werden 50 g 3-Chlorpropylmethyldimethoxysilan (0,274 mol) mit 43,5 g Natriumthiosulfat zu Poly(3-thiosulfatopropylmethyl)siloxan umgesetzt. Das eingedampfte Produktgemisch wird dann in 50 ml Ethanol aufgenommen, mit 5 g Zinkstaub und 80 g Hexamethyldisiloxan versetzt und aufgeheizt. Sobald die Mischung siedet, werden innerhalb von 25 Minuten 50 ml 37 %ige Salzsäure in Wasser zudosiert, anschließend wird noch 1 Stunde am Rückfluß gekocht. Nach Abkühlung auf Raumtemperatur wird eine Mischung aus Wasser und Toluol (je 250 ml) zugegeben, die organische Phase abgetrennt und bei 70 °C und 50 Pa eingedampft. Zurück bleiben 62,5 g farblose Flüssigkeit (Viskosität: 5,6 $mm^2s^{-1}$), die hauptsächlich aus einem Gemisch von 1,1,1,3,5,5,5-Heptamethyl-3-(3-mercaptopropyl)trisiloxan und 1,1,1,3,5,7,7,7-Octamethyl-3,5-bis(3-mercaptopropyl)tetrasiloxan besteht. Die durchschnittliche Zusammensetzung ist

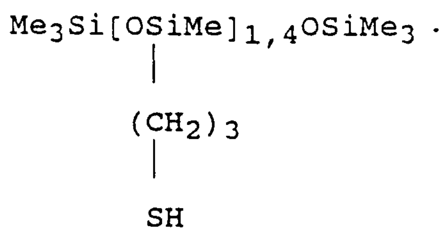

## Patentansprüche

1. Buntesalzgruppen aufweisende Organosiliciumverbindungen, die keine der Buntesalzgruppe benachbarte Hydroxylgruppe aufweisen, aus Einheiten der allgemeinen Formel

$$R_a(R^1O)_bR^2_cSiO_{\frac{4-a-b-c}{2}} \qquad (I),$$

worin

- R gleich oder verschieden sein kann und Wasserstoffatom oder einen einwertigen, gegebenenfalls substituierten Kohlenwasserstoffrest mit 1 bis 12 Kohlenstoffatomen bedeutet,
- $R^1$ gleich oder verschieden sein kann und Wasserstoffatom oder einen einwertigen, gegebenenfalls substituierten Kohlenwasserstoffrest mit 1 bis 6 Kohlenstoffatomen bedeutet,
- $R^2$ gleich oder verschieden sein kann und einen Rest $-QS_2O_3M$ bedeutet mit Q gleich zweiwertigem Kohlenwasserstoffrest und M gleich Alkalirest oder gegebenenfalls substituierter Ammoniumrest,
- a 0, 1, 2 oder 3 ist,
- b 0, 1, 2 oder 3 ist und
- c 0, 1, 2 oder 3 ist,

mit der Maßgabe, daß die Organosiliciumverbindung mindestens einen Rest $R^2$ aufweist und die

Summe aus a, b und c kleiner oder gleich 3 ist.

**2.** Verfahren zur Herstellung von Buntesalzgruppen aufweisenden Organosiliciumverbindungen, dadurch gekennzeichnet, daß mindestens ein Silan der allgemeinen Formel

$R^3_dR^5_eSi(OR^4)_{4-d-e}$ (II)

und/oder dessen Teilhydrolysat,
wobei

- $R^3$ gleich oder verschieden sein kann und Wasserstoffatom oder einen einwertigen, gegebenenfalls substituierten Kohlenwasserstoffrest mit 1 bis 12 Kohlenstoffatomen bedeutet,
- $R^4$ gleich oder verschieden sein kann und Wasserstoffatom oder einen einwertigen, gegebenenfalls substituierten Kohlenwasserstoffrest mit 1 bis 6 Kohlenstoffatomen bedeutet,
- $R^5$ gleich oder verschieden sein kann und den Rest -Q'Y bedeutet mit Q' gleich zweiwertigem, gegebenenfalls substituiertem Kohlenwasserstoffrest, wobei Hydroxylgruppen als Substituenten ausgeschlossen sind, und Y gleich Halogenatom,
- d 0, 1 oder 2 ist und
- e 1, 2 oder 3 ist,

mit der Maßgabe, daß die Summe aus d und e kleiner oder gleich drei ist,
und gegebenenfalls mindestens ein Silan der Formel

$R^6_fSi(OR^7)_{4-f}$ (III)

und/oder dessen Teilhydrolysat,
wobei

- $R^6$ gleich oder verschieden sein kann und Wasserstoffatom oder einen einwertigen, gegebenenfalls substituierten Kohlenwasserstoffrest mit 1 bis 12 Kohlenstoffatomen bedeutet,
- $R^7$ gleich oder verschieden sein kann und Wasserstoffatom oder einen einwertigen, gegebenenfalls substituierten Kohlenwasserstoffrest mit 1 bis 6 Kohlenstoffatomen bedeutet und
- f 0, 1, 2 oder 3 ist,

mit mindestens einem Thioschwefelsäuresalz und Wasser umgesetzt wird.

**3.** Verfahren nach Anspruch 2, dadurch gekennzeichnet, daß Y die Bedeutung von Chloratom hat.

**4.** Verfahren nach Anspruch 2 oder 3, dadurch gekennzeichnet, daß als Thioschwefelsäuresalze bei 100 °C und 1013 hPa in Wasser zumindest zu 10 Gewichtsprozent lösliche Verbindungen der Formel

$$M'_2S_2O_3 \qquad (V),$$

wobei M' gleich oder verschieden sein kann und Alkalirest oder gegebenenfalls substituierten Ammoniumrest bedeutet, eingesetzt werden.

**5.** Verfahren nach einem oder mehreren der Ansprüche 2 bis 4, dadurch gekennzeichnet, daß Thioschwefelsäuresalz in Mengen von 1 Mol bis 2 Mol, bezogen auf ein Mol Rest Y im eingesetzten Silan der Formel (II), eingesetzt wird.

**6.** Verfahren nach einem oder mehreren der Ansprüche 2 bis 5, dadurch gekennzeichnet, daß Silan der Formel (III) in Mengen von 0 bis 1000 Gewichtsprozent, bezogen auf das Gesamtgewicht an eingesetztem Silan der Formel (II), eingesetzt wird.

**7.** Verfahren zur Herstellung von mercaptofunktionellen Organosiliciumverbindungen, dadurch gekennzeichnet, daß Buntesalzgruppen aufweisende Organosiliciumverbindungen gemäß Anspruch 1 oder herstellbar nach Anspruch 2 in Anwesenheit von Wasser und Säure umgesetzt werden.

**8.** Verfahren nach Anspruch 7, dadurch gekennzeichnet, daß
in einer 1. Stufe

mindestens ein Silan der allgemeinen Formel (II) gemäß Anspruch 2 und/oder dessen Teilhydrolysat und gegebenenfalls mindestens ein Silan der Formel (III) gemäß Anspruch 2 und/oder dessen Teilhydrolysat mit mindestens einem Thioschwefelsäuresalz und Wasser umgesetzt wird,
in einer 2. Stufe
nach Beendigung der 1. Stufe die Reaktionsmischung gegebenenfalls ganz oder teilweise eingedampft wird sowie
in einer 3. Stufe
der in der 2. Stufe erhaltene Rückstand mit Säure, Wasser und gegebenenfalls weiteren Stoffen umgesetzt wird.

9. Weiterbildung des Verfahrens gemäß Anspruch 7 oder 8, dadurch gekennzeichnet, daß die so erhaltenen mercaptofunktionellen Organosiliciumverbindungen mit mindestens einem Organopolysiloxan aus Einheiten der allgemeinen Formel

$$R^9_g(R^{10}O)_hSiO_{(4-g-h)/2} \quad (VI),$$

wobei
- $R^9$ gleich oder verschieden sein kann und Wasserstoffatom oder einen einwertigen, gegebenenfalls substituierten Kohlenwasserstoffrest mit 1 bis 12 Kohlenstoffatomen bedeutet,
- $R^{10}$ gleich oder verschieden sein kann und Wasserstoffatom oder einen einwertigen, gegebenenfalls substituierten Kohlenwasserstoffrest mit 1 bis 6 Kohlenstoffatomen bedeutet,
- g 1, 2 oder 3 und
- h 0, 1 oder 2 ist,

mit der Maßgabe, daß die Summe aus g und h kleiner oder gleich 3 ist,
äquilibriert werden.

## Claims

1. Organosilicon compound which contains Bunte salt groups, contains no hydroxyl group adjacent to the Bunte salt group and consists of units of the general formula

$$R_a(R^1O)_bR^2_cSiO_{\frac{4-a-b-c}{2}} \quad (I)$$

in which
- R can be identical or different and denotes a hydrogen atom or a monovalent, optionally substituted hydrocarbon radical having 1 to 12 carbon atoms,
- $R^1$ can be identical or different and denotes a hydrogen atom or a monovalent, optionally substituted hydrocarbon radical having 1 to 6 carbon atoms,
- $R^2$ can be identical or different and denotes a radical $-QS_2O_3M$, where Q is a divalent hydrocarbon radical and M is an alkali metal radical or optionally substituted ammonium radical,
- a is 0, 1, 2 or 3,
- b is 0, 1, 2 or 3 and
- c is 0, 1, 2 or 3,

with the proviso that the organosilicon compound contains at least one radical $R^2$ and the sum of a, b and c is less than or equal to 3.

2. Process for the preparation of an organosilicon compound which contains Bunte salt groups, characterized in that at least one silane of the general formula

$$R^3_dR^5_eSi(OR^4)_{4-d-e} \quad (II)$$

and/or a partial hydrolysate thereof, in which

- $R^3$ can be identical or different and denotes a hydrogen atom or a monovalent, optionally substituted hydrocarbon radical having 1 to 12 carbon atoms,
- $R^4$ can be identical or different and denotes a hydrogen atom or a monovalent, optionally substituted hydrocarbon radical having 1 to 6 carbon atoms,
- $R^5$ can be identical or different and denotes the radical -Q'Y, where Q' is a divalent, optionally substituted hydrocarbon radical, hydroxyl groups being excluded as substituents, and Y is a halogen atom,
- d is 0, 1 or 2, and
- e is 1, 2 or 3,

with the proviso that the sum of d and e is less than or equal to 3,
and, if appropriate, at least one silane of the formula

$$R^6_fSi(OR^7)_{4-f} \qquad (III)$$

and/or a partial hydrolysate thereof,
in which

- $R^6$ can be identical or different and denotes a hydrogen atom or a monovalent, optionally substituted hydrocarbon radical having 1 to 12 carbon atoms,
- $R^7$ can be identical or different and denotes a hydrogen atom or a monovalent, optionally substituted hydrocarbon radical having 1 to 6 carbon atoms and
- f is 0, 1, 2 or 3,

are reacted with at least one thiosulphuric acid salt and water.

**3.** Process according to Claim 2, characterized in that Y denotes a chlorine atom.

**4.** Process according to Claim 2 or 3, characterized in that a compound which is soluble in water to the extent of at least 10% by weight at 100 °C under 1013 hPa, of the formula

$$M'_2S_2O_3 \qquad (V)$$

in which M' can be identical or different and denotes an alkali metal radical or an optionally substituted ammonium radical, is employed as the thiosulphuric acid salt.

**5.** Process according to one or more of Claims 2 to 4, characterized in that the thiosulphuric acid salt is employed in an amount of 1 mol to 2 mol per mole of the radical Y in the silane of the formula (II) employed.

**6.** Process according to one or more of Claims 2 to 5, characterized in that the silane of the formula (III) is employed in an amount of 0 to 1000% by weight, based on the total weight of silane of the formula (II) employed.

**7.** Process for the preparation of a mercaptofunctional organosilicon compound, characterized in that an organosilicon compound according to Claim 1 or preparable according to Claim 2, containing Bunte salt groups, is reacted in the presence of water and an acid.

**8.** Process according to Claim 7, characterized in that, in a 1st stage, at least one silane of the general formula (II) according to Claim 2 and/or a partial hydrolysate thereof, and, if appropriate, at least one silane of the formula (III) according to Claim 2 and/or a partial hydrolysate thereof are reacted with at least one thiosulphuric acid salt and water,
in a 2nd stage, when the 1st stage has ended, the reaction mixture is completely or partly evaporated, as appropriate, and
in a third stage, the residue obtained in the 2nd stage is reacted with an acid, water and, if appropriate, other substances.

**9.** Further development of the process according to Claim 7 or 8, characterized in that the mercaptofunctional organosilicon compound thus obtained is equilibrated with at least one organopolysiloxane consisting of units of the general formula

$R^9_g(R^{10}O)_hSiO_{(4-g-h)/2}$ (VI)

in which

- $R^9$ can be identical or different and denotes a hydrogen atom or a monovalent, optionally substituted hydrocarbon radical having 1 to 12 carbon atoms,
- $R^{10}$ can be identical or different and denotes a hydrogen atom or a monovalent, optionally substituted hydrocarbon radical having 1 to 6 carbon atoms,
- g is 1, 2 or 3 and
- h is 0, 1 or 2,

with the proviso that the sum of g and h is less than or equal to 3.

## Revendications

1. Composés organosiliciés présentant des groupes de sels de Bunte, qui ne présentent pas de groupes hydroxyles voisins du groupe de sels de Bunte, sont composés d'unités de formule générale

$$R_a(R^1O)_bR^2_cSiO_{\frac{4-a-b-c}{2}} \quad (I),$$

dans laquelle

- R peut être identique ou différent, et signifie l'atome d'hydrogène ou un radical hydrocarbone monovalent, éventuellement substitué, comportant de 1 à 12 atomes de carbone,
- $R^1$ peut être identique ou différent, et signifie l'atome d'hydrogène ou un radical hydrocarbone monovalent, éventuellement substitué, comportant de 1 à 6 atomes de carbone,
- $R^2$ peut être identique ou différent, et signifie un radical $-QS_2O_3M$ avec Q représentant un radical hydrocarboné bivalent et M représentant un radical alcali ou un radical ammonium éventuellement substitué,
- a est 0, 1, 2 ou 3,
- b est 0, 1, 2 ou 3, et
- c est 0, 1, 2 ou 3,

à la condition que le composé organosilicié présente au moins un radical $R^2$, et que la somme de a, b, et c soit inférieure ou égale à 3.

2. Procédé pour la préparation de composés organosiliciés présentant des groupes de sels de Bunte, caractérisé en ce qu'on fait réagir au moins un silane de formule générale

$R^3_dR^5_eSi(OR^4)_{4-d-e}$ (II)

et/ou son hydrolysat partiel,
dans laquelle

- $R^3$ peut être identique ou différent, et représente l'atome d'hydrogène ou un radical hydrocarbone monovalent, éventuellement substitué, comportant de 1 à 12 atomes de carbone,
- $R^4$ peut être identique ou différent, et représente l'atome d'hydrogène et un radical hydrocarbone monovalent, éventuellement substitué, comportant de 1 à 6 atomes de carbone,
- $R^5$ peut être identique ou différent, et représente le radical -Q'Y avec Q' étant identique à un radical hydrocarbone bivalent éventuellement substitué, les groupes hydroxyles en tant que substituants étant exclus, et Y étant identique à un atome d'halogène,
- d est 0, 1 ou 2, et
- e est 1, 2 ou 3,

à la condition que la somme de d et e soit inférieure ou égale à 3, et éventuellement au moins un silane de formule

$R^6_fSi(OR^7)_{4-f}$ (III)

et/ou son hydrolysat partiel,
dans laquelle

- $R^6$ peut être identique ou différent, et représente l'atome d'hydrogène ou un radical hydrocarbone monovalent, éventuellement substitué, comportant de 1 à 12 atomes de carbone,
- $R^7$ peut être identique ou différent, et représente l'atome d'hydrogène ou un radical hydrocarbone monovalent, éventuellement substitué, comportant de 1 à 6 atomes de carbone, et
- f est 0, 1, 2 ou 3,

avec au moins un sel d'acide thiosulfurique et avec l'eau.

**3.** Procédé selon la revendication 2, caractérisé en ce que Y signifie l'atome de chlore.

**4.** Procédé selon la revendication 2 ou 3, caractérisé en ce qu'on utilise en tant que sels d'acide thiosulfurique, à 100 °C et 1013 hPa, dans l'eau, au moins 10 % en poids de composés solubles de formule

$$M'_2S_2O_3 \qquad (V)$$

dans laquelle

- M' peut être identique ou différent et représente un radical alcali ou un radical ammonium, éventuellement substitué.

**5.** Procédé selon une ou plusieurs revendications 2 à 4, caractérisé en ce qu'on utilise le sel d'acide thiosulfurique en quantités de 1 mole à 2 moles, par rapport à 1 mole de radical Y dans le silane de formule (II) utilisé.

**6.** Procédé selon une ou plusieurs revendications 2 à 5, caractérisé en ce qu'on utilise le silane de formule (III) en quantités de 0 à 1000 % en poids, par rapport au poids total de silane de formule (II) utilisé.

**7.** Procédé pour la préparation de composés organosiliciés à fonction mercaptan, caractérisé en ce qu'on utilise les composés organosiliciés présentant des groupes de sels de Bunte selon la revendication 1 ou que l'on peut préparer selon la revendication 2, par réaction en présence de l'eau et d'un acide.

**8.** Procédé selon la revendication 7, caractérisé en ce qu'on fait réagir
dans une première étape
au moins un silane de formule générale (II) selon la revendication 2, et/ou son hydrolysat partiel, et éventuellement au moins un silane de formule (III) selon la revendication 2, et/ou son hydrolysat partiel, avec au moins un sel d'acide thiosulfurique et l'eau,
dans une deuxième étape,
après avoir terminé la première étape, on évapore le mélange réactionnel éventuellement complètement ou partiellement, ainsi que
dans une troisième étape,
on fait réagir le résidu obtenu dans la deuxième étape avec l'acide, l'eau et éventuellement avec d'autres matières.

**9.** Perfectionnement du procédé selon la revendication 7 ou 8, caractérisé en ce qu'on équilibre les composés organosiliciés à fonction mercaptan ainsi obtenus, avec au moins un organo-polysiloxane, composé d'unités de formule générale

$$R^9_g(R^{10}O)_hSiO_{(4-g-h)/2} \qquad (VI),$$

dans laquelle

- $R^9$ peut être identique ou différent, et représente l'atome d'hydrogène ou un radical hydrocarbone monovalent, éventuellement substitué, comportant de 1 à 12 atomes de carbone,
- $R^{10}$ peut être identique ou différent, et représente l'atome d'hydrogène ou un radical hydrocarbone monovalent, éventuellement substitué, avec 1 à 6 atomes de carbone,

g est 1, 2 ou 3, et

h est 0, 1 ou 2,

à la condition que la somme de g et h soit inférieure ou égale à 3.